# EUROPÄISCHE PATENTSCHRIFT

(11) **EP 3 614 029 B1**
(45) Veröffentlichungstag und Bekanntmachung des Hinweises auf die Patenterteilung: **01.12.2021**
(21) Anmeldenummer: 19189598.6
(22) Anmeldetag: 01.08.2019
(51) Int. Cl.: F16L 21/03, F16L 21/04, F16L 21/06, F16L 47/10, F23J 13/04, E04F 17/02

(54) **KUNSTSTOFF-ABGASMUFFENROHR SOWIE HEIZUNGSSYSTEM UND VERFAHREN**
PLASTIC TUBE FOR EXHAUST GAS AS WELL AS HEATING SYSTEM AND METHOD
TUYAU À MANCHON EN MATIÈRE PLASTIQUE POUR GAZ D'ÉCHAPPEMENT AINSI QUE SYSTÈME DE CHAUFFAGE ET PROCÉDÉ

(30) Priorität: 24.08.2018 DE 102018120718
(43) Veröffentlichungstag der Anmeldung: 26.02.2020
(73) Patentinhaber: Bächle, Dieter, 8595 Altnau (CH)
(72) Erfinder: Bächle, Dieter, 8595 Altnau (CH)
(74) Vertreter: Patent- und Rechtsanwälte Behrmann Wagner PartG mbB

(56) Entgegenhaltungen:
- EP-A2- 1 281 907
- DE-B3-102012 106 232
- US-A1- 2008 048 446

## Beschreibung

Die Erfindung betrifft ein bogenförmiges oder geradliniges Kunststoff-Abgasmuffenrohr für die Abgasleitung von Gebäudeheizungen , mit einem, bevorzugt als Kunststoffspritzgussteil ausgebildeten, Rohrkörper und einem endseitigen Muffenabschnitt zur Aufnahme eines Rohrabschnittes eines weiteren Abgasrohres zur Herstellung einer Abgasmuffenrohrverbindung, wobei in dem Muffenabschnitt eine als Lippendichtung ausgebildete Ringdichtung zur dichtenden Anlage am Außenumfang des in einer Einsteckrichtung in den Muffenabschnitt einsteckbaren Rohrabschnittes in einer einen von einem Nutgrundabschnitt des Rohrkörpers sowie eine erste und eine zweite sich winklig dazu erstreckenden Nutwand aufweisenden, nach radial innen offenen Innenumfangsnut aufgenommen ist, die entgegen der Einsteckrichtung von einem koaxial zum Rohrkörper angeordneten Steckring des Kunststoff-Abgasmuffenrohrs begrenzt ist, der mit dem Rohrkörper verrastet ist, wobei die erste Nutwand von einem ringförmigen Nutwandabschnitt des Steckrings gebildet ist, wobei der Steckring einen sich axial zum Nutwandabschnitt erstreckenden, ringförmigen Umfangswandabschnitt umfasst, der bei mit dem Rohrkörper verrastetem Steckring radial außerhalb des den Nutgrund bildenden Nutgrundabschnitt des Rohrkörpers angeordnet ist, der sich radial außen an dem Umfangswandabschnitt des Steckrings abstützt.

Ferner betrifft die Erfindung ein Heizungssystem gemäß Anspruch 11, mit einem solchen Kunststoff-Abgasmuffenrohr. Außerdem betrifft die Erfindung ein Verfahren zur Herstellung eines Kunststoff-Abgasmuffenrohrs für die Abgasführung von Gebäudeheizungen gemäß dem Anspruch 12. Abgasmuffenrohre aus Kunststoff zur Abgasführung weisen in der Regel einen endseitigen Muffenabschnitt zum Einstecken eines weiteren Abgasrohres auf. In dem Muffenabschnitt befindet sich zur Gewährleistung einer ausreichenden Dichtheit eine in der Regel als Lippendichtung ausgebildete Ringdichtung, die in einer Innenumfangsnut des Muffenabschnitts aufgenommen ist. Diese Innenumfangsnut wird in der Regel vollständig von einem einteiligen Rohrkörper des Muffenrohres gebildet. Diese Technologie hat sich bewährt - jedoch ist die Herstellung aufgrund der schwierigen Entformbarkeit im Kunststoffspritzgussverfahren aufwendig und aufgrund der hierfür notwendigen komplexen Werkzeuge kostenintensiv.

Ein alternatives Abgasmuffenrohr ist in der CH 686 798 A5 vorgeschlagen worden. Bei dem aus dieser Druckschrift bekannten Muffenrohr wird die Umfangsnut nicht ausschließlich von einem Rohrkörper des Muffenrohrs begrenzt, sondern axial entgegen einer Einsteckrichtung für ein aufzunehmendes Rohr von einem als Einsteckring ausgebildeten Steckring, der in dem Rohrkörper festgelegt ist und eine obere bzw. äußere Nutwand der Innenumfangsnut bildet. Das heißt der Montageaufwand für ein solches, mehrteiliges Abgasmuffenrohr ist höher - dieser Nachteil wird jedoch kompensiert durch die vereinfachte Fertigbarkeit im Kunststoffspritzgussverfahren, da das bekannte Muffenrohr axial auf einfache Weise entformbar ist. Die in der Praxis schlechte Zentrizität bzw. Rundheit des Einsteckrings verstärkt die Dichtheitsproblematik.

Aus der FR 1 520 687 ist ein Muffenrohr bekannt, umfassend einen Rohrkörper sowie einen in diesen einsetzbaren und mit dem Rohrkörper verrastbaren Einsteckring, der abschnittsweise einen Nutgrund einer Innenumfangsnut begrenzt, in welchem eine Ringdichtung aufgenommen ist, die sich in radialer Richtung nach außen sowohl am Rohrkörper als auch axial benachbart hierzu am Einsteckring abstützt. Da die Position des Einsteckrings nie exakt positioniert ist, sich die Ringdichtung jedoch in radialer Richtung am Einsteckring abstützt, kann dies negative Auswirkungen auf die Dichtwirkung aufweisen. Auch ist zumindest abschnittsweise die Wandstärke des Muffenrohres im Bereich des Nutgrundes der Innenumfangsnut gering. Insgesamt scheint die Dichtwirkung verbesserungswürdig.

Weiter ist ein Abgasmuffenrohr bekannt, bei dem ein Steckring einen sich axial zu einem Nutwandabschnitt erstreckenden, ringförmigen Umfangswandabschnitt umfasst, der bei mit einem Rohrkörper verrastetem Steckring radial außerhalb des einen Nutgrund bildenden Nutgrundabschnitt des Rohrkörpers angeordnet ist, der sich radial außen an dem Umfangswandabschnitt des Steckrings abstützt. Bei einem derartigen Muffenrohr ist der Steckring als Aufsteckring ausgebildet und ist hierzu zusätzlich zu seinem eine Innenumfangsnut entgegen einer Einsteckrichtung begrenzenden ringförmigen Nutwandabschnitt mit einem sich axial ausgehend vom Nutwandabschnitt in der Einsteckrichtung erstreckenden Umfangswandabschnitt versehen, der bei mit dem Rohrkörper verrasteten Steckring radial außerhalb des den Nutgrund begrenzenden Nutgrundabschnitts des Rohrkörpers angeordnet ist, so dass sich der Nutgrundabschnitt radial außen am ringförmigen Umfangswandabschnitt des Steckrings abstützen kann. Anders ausgedrückt umfasst der Steckring einen sich ausgehend vom Nutwandabschnitt axial in der Einsteckrichtung erstreckenden Umfangswandabschnitt der radial benachbart zum Nutwandabschnitt des Rohrkörpers, und zwar radial außerhalb von diesem angeordnet ist.

Der Nutgrund ist in diesem Fall nicht von dem Steckring sondern vollständig bzw. ausschließlich von dem Rohrkörper, konkret von dessen Nutgrundabschnitt gebildet, wodurch sich also die Lippendichtung in radialer Richtung nach außen dann ausschließlich am Rohrkörper und nicht am Steckring abstützt. Nachteilig ist jedoch, dass die Lippendichtung im Rahmen einer Montage eines derartigen Muffenrohres aus der Innenumfangsnut herausgewalkt bzw. herausgedrückt werden kann, wodurch die Dichtwirkung verschlechtert wird. Weiter steht bei einem derartigen Muffenrohr kein Mittel zur Verfügung, den Steckring gegen Bewegungen in axialer und radialer Richtung zu sichern.

Die EP 1 281 907 A1 offenbart eine Rohrverbindung vom Typ ohne Abstandselement, welche einen Pressring und einen Dichtungsring umfasst, wobei der Dichtungsring von dem Pressring direkt mit einem Druck beaufschlagt wird. Der Pressring weist an seinem Außenumfang einen vorstehenden Bereich auf und ist an einem Außenumfang einer Endseite eines verbundenen Rohrs angeordnet. Der Pressring ist an einer Stelle in Umfangsrichtung getrennt und kann mit einem Befestigungsmittel eingespannt werden. Ein Verbindungshauptkörper weist einen vorstehenden Bereich auf, der dem vorstehenden Bereich des Pressrings gegenüberliegt, sowie einen Aufnahmeöffnungsbereich, der sich an einem Innenumfang des vorstehenden Bereichs derart in Richtung des Pressrings erstreckt, dass er unter Bildung eines Freiraums in Umfangsrichtung dazwischen auf den Außenumfang des verbundenen Rohrs anordenbar ist. Der Dichtungsring ist zwischen dem Verbindungshauptkörper und dem verbundenen Rohr vorgesehen und in den Aufnahmeöffnungsbereich durch seine elastische Verformung eingepasst. Elastisch verformt wird der Dichtungsring dadurch, dass er vom Pressring mit Druck beaufschlagt wird, während der Pressring durch Betätigung eines weiteren Befestigungsmittels in Richtung des Verbindungshauptkörpers bewegt wird, so dass der Dichtungsring mit dem Aufnahmeöffnungsbereich gekoppelt wird und mit einer Außenumfangsfläche des verbundenen Rohrs in Presskontakt tritt.

Die US 2008/048446 A1 offenbart ein weiteres Abgasmuffenrohr mit einem Steckring.

Ausgehend von dem vorgenannten Stand der Technik liegt der Erfindung daher die Aufgabe zugrunde, ein einfach im Kunststoffspritzgussverfahren herstellbares, mehrteiliges Abgasmuffenrohr aus Kunststoff anzugeben, das sich durch eine Sicherung des Steckrings sowie eine gute Dichtwirkung auszeichnet.

Ferner besteht die Aufgabe darin, ein Heizungssystem und eine Verfahren mit einem bzw. für ein entsprechend verbessertes Abgasmuffenrohr anzugeben.

Diese Aufgabe wird hinsichtlich des Kunststoff-Abgasmuffenrohres mit den Merkmalen des Anspruchs 1 gelöst, d.h. bei einem gattungsgemäßen Kunststoff-Abgasmuffenrohr dadurch, dass die Lippendichtung zumindest eine Nase zur Anlage der Lippendichtung an einem Profil einer entsprechend einer Nase geformten im Muffenabschnitt am Rohrkörper befindlichen Ausnehmung ausbildet, wobei der Steckring als ein mit einem Sicherungsmittel versehener offener Ring ausgebildet ist, mittels dessen der Ring von einem umfangoffenen Zustand in einen umfanggeschlossenen Zustand überführbar ist, so dass der Ring im umfanggeschlossenen Zustand gegen Bewegungen in axialer und radialer Richtung sicherbar ist.

Hinsichtlich des Heizungssystems wird die Aufgabe mit den Merkmalen des Anspruchs 11 gelöst. Hinsichtlich des Verfahrens wird die Aufgabe mit den Merkmalen des Anspruchs 12 gelöst.

Vorteilhafte Weiterbildungen der Erfindung sind in den Unteransprüchen angegeben. Bei dem erfindungsgemäßen Kunststoff-Abgasmuffenrohr ist der Steckring als Aufsteckring ausgebildet und ist hierzu zusätzlich zu seinem die Innenumfangsnut entgegen der Einsteckrichtung begrenzenden ringförmigen Nutwandabschnitt mit einem sich axial ausgehend vom Nutwandabschnitt in der Einsteckrichtung erstreckenden Umfangswandabschnitt versehen, der bei mit dem Rohrkörper verrasteten Steckring radial außerhalb des den Nutgrund begrenzenden Nutgrundabschnitts des Rohrkörpers angeordnet ist, so dass sich der Nutgrundabschnitt radial außen am ringförmigen Umfangswandabschnitt des Steckrings abstützen kann. Anders ausgedrückt umfasst der Steckring einen sich ausgehend vom Nutwandabschnitt axial in der Einsteckrichtung erstreckenden Umfangswandabschnitt der radial benachbart zum Nutwandabschnitt des Rohrkörpers, und zwar radial außerhalb von diesem angeordnet ist. Darüber hinaus ist die Abgasmuffenrohrwand im Bereich des Nutgrundes aufgedoppelt, wodurch die Stabilität des Abgasmuffenrohres verbessert wird. Gleichzeitig kann sich der Nutgrundabschnitt des Rohrkörpers in radialer Richtung nach außen am Umfangswandabschnitt des Steckrings abstützen, wodurch die Zentrizität des Abgasmuffenrohres im Bereich der Innenumfangsdichtung verbessert wird, was wiederum zu einer verbesserten Dichtheit beiträgt. Ein weiterer Vorteil der erfindungsgemäßen Ausbildung und Anordnung des Steckrings besteht darin, dass beim Aufstecken des Steckrings die Lippendichtung keinen Scherkräften unterworfen wird, was der Fall wäre, wenn der Umfangsabschnitt nicht radial außerhalb sondern radial innerhalb des Nutgrundabschnittes des Rohrkörpers angeordnet wäre. Auch werden etwaige Rundheitsfehler des bevorzugt dünnwandigeren Steckrings aufgrund der Zentrierung über den Nutgrundabschnitt des Rohrkörpers ausgeglichen. Ein weiterer Vorteil besteht darin, dass der Steckring, insbesondere Umfangswandabschnitt und Rohrkörper, insbesondere Nutgrundabschnitt eine vergleichsweise lange Labyrinthdichtung bilden, die zur zusätzlichen Verbesserung der Dichtheit beiträgt. Weiter bildet die Lippendichtung zumindest eine Nase zur Anlage der Lippendichtung an einem Profil einer entsprechend einer Nase geformten im Muffenabschnitt am Rohrkörper befindlichen Ausnehmung aus. Dadurch wird verhindert, dass die Lippendichtung während eines Montagevorgangs aus der Innenumfangsnut herausgewalkt bzw. herausgedrückt wird. Vielmehr wird die Dichtung im Rahmen der Montage automatisch symmetrisiert oder zylindrisiert. Ferner ist der Steckring als ein mit einem Sicherungsmittel versehener offener Ring ausgebildet, mittels dessen der Ring von einem umfangoffenen Zustand in einen umfanggeschlossenen Zustand überführbar ist, so dass der Ring im umfanggeschlossenen Zustand gegen Bewegungen in axialer und radialer Richtung sicherbar ist. Auch wird ein von dem Muffenabschnitt aufgenommener Rohrabschnitt eines weiteren Abgasrohres bzw. ein weiteres Abgasrohr durch Herstellung des umfanggeschlossenen Zustands bei einer Herstellung einer Abgasmuffenrohrverbindung gegen Bewegungen in axialer Richtung gesichert. Das Abgasmuffenrohr sowie das weitere Abgasrohr werden so in der axialen Richtung von dem Steckring bzw. der Muffe nicht nur fixiert bzw. verbunden, sondern auch axial gesichert. Ein weiterer Vorteil des offenen bzw. geschlitzten Rings besteht darin, dass bei einer zunehmenden Verringerung des Spaltes bzw. des Schlitzes die Dichtung in der Muffe gequetscht wird, also insbesondere eine Sicherung der Dichtung in der Muffe herbeigeführt wird. Dieser Effekt führt zu einer erhöhten Dichtheit des Muffenrohrs. Darüber hinaus erfolgt durch ein Herstellen des umfanggeschlossenen Zustandes eine Sicherung der Muffe an einem entsprechenden Abgasrohr bzw. eine axiale Sicherung von mittels der Muffe fixierten bzw. verbundenen Abgasrohren. Das Abgasmuffenrohr bzw. die Muffe kann dann derart ausgebildet sein, dass mit einer zunehmenden Verringerung einer Größe des Spaltes bzw. Schlitzes bei einem Erreichen einer ersten Größe des Spaltes eine Dichtwirkung erzielt wird und bei noch weiterer Verringerung der Größe des Spaltes bei einem Erreichen einer zweiten Größe des Spaltes, wobei die zweite Größe kleiner ist als die erste Größe, zusätzlich eine axiale Sicherung der Abgasrohre erreicht wird. Ebenso ist es denkbar, dass die Dichtwirkung und die axiale Sicherung bei derselben Größe des Spaltes gleichzeitig erreicht werden. Somit wird insbesondere eine axiale Sicherung der Muffe an dem Abgasrohr bzw. eine axiale Sicherung der Abgasrohre ermöglicht. Insgesamt wird durch die Erfindung ein kostengünstig fertigbares, robustes und sich durch eine erhöhte Dichtheit auszeichnendes Kunststoff-Abgasmuffenrohr bereitgestellt.

Die Lippendichtung kann an einer ersten Axialseite ein erstes axiales Lippenprofil mit einer ersten Nase aufweisen, welche an der teilweise als eine erste Ausnehmung eines Nutwandabschnittes des Rohrkörpers ausgebildeten zweiten Nutwand angelegt ist. Demnach ist die zweite Nutwand teilweise als eine erste Ausnehmung ausgebildet, deren Profil mit dem Profil der ersten Nase korrespondiert. Bedingt dadurch wird ein aus der Innenumfangsnut Herausgedrücktwerden der Lippendichtung in der Region der ersten Axialseite wirksam verhindert, da die erste Nase während einer Montage bzw. eines Herstellens des umfanggeschlossenen Zustands des Steckrings in der ersten Ausnehmung sicher verwahrt ist. Dabei kann die erste Nase eine Dichtlippe des ersten axialen Lippenprofils ausbilden. Doch es ist ebenso denkbar, dass die erste Nase zusätzliche Dichtlippen aufweist, um eine Dichtwirkung zu vergrößern.

Weiter kann die Lippendichtung auf einer Außenseite eine sich radial nach außen erstreckende hakenförmige zweite Nase aufweisen, welche an einer passend zu der zweiten Nase geformten Axialseite des Nutgrundabschnittes des Rohrkörpers derart angelegt ist, dass ein radial außen befindlicher Abschnitt der zweiten Nase den Umfangswandabschnitt berührt. Bedingt dadurch wird ein aus der Innenumfangsnut Herausgedrücktwerden der Lippendichtung in der Region der Außenseite bzw. der zweiten Axialseite der Lippendichtung wirksam verhindert, da die zweite Nase während einer Montage bzw. eines Herstellens des umfanggeschlossenen Zustands des Steckrings an der passend zu der zweiten Nase geformten Axialseite des Nutgrundabschnitts des Rohrkörpers formschlüssig anliegt. Insbesondere dadurch, dass die zweite Nase hakenförmig ausgebildet ist, so dass diese eine Nase der Axialseite des Nutgrundabschnitts des Rohrkörpers hintergreift und den Umfangswandabschnitt dabei mit einem radial außen befindlichen Abschnitt berührt wird die Dichtwirkung deutlich erhöht. Die Lippendichtung kann auf einer zweiten Axialseite ein zweites axiales Lippenprofil mit zusätzlichen Dichtlippen aufweisen. Weil die Ausbildung der zweiten Nase eine Verlängerung einer Länge der zweiten Axialseite der Lippendichtung zur Folge hat, kann das zweite axiale Lippenprofil sogar eine Vielzahl von zusätzlichen Dichtlippen aufweisen. Auch dadurch kann eine Dichtwirkung wesentlich erhöht werden.

Bei einer Ausführungsform kann der Steckring vorzugsweise in einer azimutalen Richtung gleichmäßig verteilte Rastmittel aufweisen, welche mit von einer Ringschulter des Rohrkörpers ausgebildeten Gegenrastmitteln verrastet sind. Einerseits kann durch eine gleichmäßige Verteilung der Rastmittel sichergestellt werden, dass der Steckring entlang seines Umfangs sicher mit dem Rohrkörper verrastet ist. Beispielsweise kann der Azimutwinkel zwischen zwei benachbarten Rastmitteln 60° betragen. In diesem Fall ist der Ring dann mit sechs Rastmitteln ausgestattet. Andererseits kann der Steckring bedingt dadurch, dass sich nicht ein Rastmittel ohne Unterbrechung über den gesamten Umfang des Rings erstreckt, kostengünstig hergestellt werden.

Folglich können die Rastmittel eine Schräge zur Ausbildung einer Quetschkraft auf die Lippendichtung beim Herstellen des umfanggeschlossenen Zustandes ausbilden. Bedingt durch eine Schräge der Rastmittel bewegt sich der Steckring dann automatisch parallel zur Einsteckrichtung. Dadurch wird eine Quetschkraft auf die Lippendichtung ausgebildet und die Lippendichtung wird in der axialen Richtung gequetscht bzw. gestaucht, was insbesondere eine erhöhte Dichtigkeit im Bereich des Nutwandabschnitts des Steckrings bzw. der zweiten Axialseite der Lippendichtung zur Folge hat.

Ferner kann ein Innendurchmesser des ringförmigen Umfangswandabschnitts kleiner als ein Außendurchmesser des Nutgrundabschnitts sein. Dadurch kann im verrasteten Zustand zwischen dem Steckring und dem Rohrkörper im Bereich des Nutgrundabschnitts ein Presssitz mit einer hohen Anpresskraft realisiert werden. Folglich kann die Lippendichtung in radialer Richtung zusammengedrückt werden, was vorteilhaft für die Dichtwirkung ist.

Die Innenumfangsnut kann in der Einsteckrichtung von der inneren, die zweite Nutwand bildenden Ringschulter des Rohrkörpers begrenzt sein. Dies ist vorteilhaft im Hinblick auf die Stabilität des Abgasmuffenrohres.

Die Lippendichtung kann aus einem heizungsabgaskondensatbeständigen Elastomermaterial ausgebildet sein. Bevorzugt ist das Elastomermaterial auch temperaturstabil, insbesondere bis Temperaturen von mindestens 40°C, ganz besonders bevorzugt mindestens 60°C, noch weiter bevorzugt mindestens 80°C. Bevorzugt ist auch das Kunststoffmaterial des Abgasmuffenrohres heizungsabgaskondensatbeständig und/oder temperaturbeständig in einem zuvor angegebenen Wertebereich.

Als Sicherungsmittel kann eine Linsenschraube zusammen mit einer Vierkantmutter oder einem Quergewindebolzen vorgesehen sein. Abhängig von der Einschraubtiefe der Schraube in die Mutter bzw. in den Quergewindebolzen kann damit die Anpresskraft zwischen dem Steckring und dem Rohrkörper reguliert werden. Auch ist es denkbar, dass der Steckring ein Aufnahmeelement für die Vierkantmutter bzw. den Quergewindebolzen aufweist, so dass diese bzw. dieser während eines Einschraubens der Linsenschraube gegen ein Verdrehen bzw. Verschieben gesichert ist. Somit kann die Montage erleichtert werden.

Als Kunststoff kann Polypropylen vorgesehen sein. Polypropylen ist wärmebeständig, stabil und kostengünstig, und eignet sich daher gut für eine Herstellung von Abgasmuffenrohren.

Die Erfindung führt auch auf ein Heizungssystem, welches sich neben einer Gebäudeheizung, insbesondere einer Gasheizung oder einer Ölheizung durch ein Abgasmuffenrohrsystem auszeichnet, welches mindestens ein erfindungsgemäßes Kunststoff-Abgasmuffenrohr aufweist, in dessen Muffenrohrabschnitt ein weiteres Abgasrohr zur Herstellung einer Muffenverbindung eingeschoben ist. Dabei liegt die Lippendichtung, bevorzugt mit der mindestens einen Dichtlippe ihres bevorzugt vorgesehenen radial inneren Lippenprofils am Außenumfang dieses eingeschobenen Abgasrohres an. Gleichzeitig stützt sich die Lippendichtung in beide Axialrichtungen an jeweils einer Nutwand ab, wobei die erste, entgegen der Einsteckrichtung des Abgasrohres orientierte Nutwand von dem Steckring und die in der Einsteckrichtung gelegene Nutwand von dem Rohrkörper gebildet ist. Bevorzugt stützt sich die Lippendichtung in zumindest einer dieser beiden Axialrichtungen über ein axiales Lippenprofil an der jeweils gegenüberliegenden Nutwand ab. Ganz besonders bevorzugt stützt sich die Lippendichtung in radialer Richtung nach außen überwiegend an dem, bevorzugt von dem Rohrkörper, nämlich von dessen Nutgrundabschnitt gebildeten Nutgrund mit einem radial äußeren Lippenprofil ab. Zusätzlich oder bevorzugt alternativ zu mindestens einem axialen Lippenprofil und/oder dem radial äußeren Lippenprofil kann in der entsprechend gegenüberliegenden Nutwand bzw. dem Nutgrund mindestens ein Ringprofilelement zum Einformen in die Lippendichtung, d.h. zur Pressung der Lippendichtung vorgesehen sein. Außerdem ist es vorteilhaft, wenn die Lippendichtung an einer ersten Axialseite ein erstes axiales Lippenprofil mit einer ersten Nase aufweist, welche an der teilweise als eine erste Ausnehmung eines Nutwandabschnittes des Rohrkörpers ausgebildeten zweiten Nutwand angelegt ist und auf einer Außenseite eine sich radial nach außen erstreckende hakenförmige zweite Nase aufweist, welche an einer passend zu der zweiten Nase geformten Axialseite des Nutgrundabschnittes des Rohrkörpers derart angelegt ist, dass ein radial außen befindlicher Abschnitt der zweiten Nase den Umfangswandabschnitt berührt.

Weitere vorteilhafte Ausführungsformen des Heizungssystems ergeben sich aus den Merkmalsbeschreibungen der auf den Anspruch 1 rückbezogenen Unteransprüche.

Zudem betrifft die vorliegende Erfindung ein Verfahren zur Herstellung eines Kunststoff-Abgasmuffenrohrs für die Abgasführung von Gebäudeheizungen, mit einem, bevorzugt als Kunststoffspritzgussteil ausgebildeten, Rohrkörper und einem endseitigen Muffenabschnitt zur Aufnahme eines Rohrabschnittes eines weiteren Abgasrohres zur Herstellung einer Abgasmuffenrohrverbindung, wobei in dem Muffenabschnitt eine als Lippendichtung ausgebildete Ringdichtung zur dichtenden Anlage am Außenumfang des in einer Einsteckrichtung in den Muffenabschnitt einsteckbaren Rohrabschnittes in einer einen von einem Nutgrundabschnitt des Rohrkörpers gebildeten Nutgrund sowie eine erste und eine zweite sich winklig dazu erstreckende Nutwand aufweisenden, nach radial innen offenen Innenumfangsnut aufgenommen wird, die entgegen der Einsteckrichtung von einem koaxial zum Rohrkörper angeordneten Steckring des Kunststoff-Abgasmuffenrohrs begrenzt wird, der mit dem Rohrkörper verrastet wird, wobei die erste Nutwand von einem ringförmigen Nutwandabschnitt des Steckrings gebildet ist, wobei der Steckring einen sich axial zum Nutwandabschnitt erstreckenden, ringförmigen Umfangswandabschnitt umfasst, der zur Herstellung eines Kunststoff-Abgasmuffenrohrs mit dem Rohrkörper verrastet wird, so dass der Steckring radial außerhalb des den Nutgrund bildenden Nutgrundabschnitt des Rohrkörpers angeordnet wird und sich radial außen an dem Umfangswandabschnitt des Steckrings abstützt, wobei die Lippendichtung zumindest eine Nase zur Anlage der Lippendichtung an einem Profil einer entsprechend einer Nasen geformten im Muffenabschnitt am Rohrkörper befindlichen Ausnehmung ausbildet, wobei der Steckring als ein mit einem Sicherungsmittel versehener offener Ring ausgebildet ist, mittels dessen der Ring von einem umfangoffenen Zustand in einen umfanggeschlossenen Zustand überführt wird, so dass der Ring im umfanggeschlossenen Zustand gegen Bewegungen in axialer und radialer Richtung gesichert wird. Zu den vorteilhaften Wirkungen des erfindungsgemäßen Verfahrens wird auf die Vorteilsbeschreibung des erfindungsgemäßen Kunststoff-Abgasmuffenrohrs verwiesen.

Die Lippendichtung kann an einer ersten Axialseite ein erstes axiales Lippenprofil mit einer ersten Nase aufweisen, welche an der teilweise als eine erste Ausnehmung eines Nutwandabschnittes des Rohrkörpers ausgebildeten zweiten Nutwand angelegt wird. Zu den vorteilhaften Wirkungen der ersten Nase wird auf die Vorteilsbeschreibung des Kunststoff-Abgasmuffenrohrs verwiesen.

Weiter kann die Lippendichtung auf einer Außenseite eine sich radial nach außen erstreckende hakenförmige zweite Nase aufweisen, welche an einer passend zu der zweiten Nase geformten Axialseite des Nutgrundabschnittes des Rohrkörpers derart angelegt wird, dass ein radial außen befindlicher Abschnitt der zweiten Nase den Umfangswandabschnitt berührt. Zu den vorteilhaften Wirkungen der zweiten Nase wird auf die Vorteilsbeschreibung des Kunststoff-Abgasmuffenrohrs verwiesen.

Der Steckring kann vorzugsweise in einer azimutalen Richtung gleichmäßig verteilte Rastmittel aufweisen, welche mit von einer Ringschulter des Rohrkörpers ausgebildeten Gegenrastmitteln verrastet werden. Zu den vorteilhaften Wirkungen der Rastmittel wird auf die Vorteilsbeschreibung des Kunststoff-Abgasmuffenrohrs verwiesen.

Ferner kann der Steckring beim Herstellen des umfanggeschlossenen Zustandes in Richtung der Einsteckrichtung bewegt werden, wodurch die Lippendichtung gequetscht wird. Durch einen derartigen Quetschvorgang kann die Lippendichtung in axialer Richtung gestaucht werden, was sich in einer erhöhten Dichtwirkung, insbesondere im Bereich des Nutwandabschnitts des Steckrings bzw. der zweiten Axialseite der Lippendichtung, niederschlägt.

Weitere vorteilhafte Ausführungsformen des Verfahrens ergeben sich aus den Merkmalsbeschreibungen der auf den Anspruch 1 rückbezogenen Unteransprüche.

Nachfolgend werden bevorzugte Ausführungsformen der Erfindung unter Bezugnahme auf die beigefügten Zeichnungen näher erläutert.

Es zeigen:
- Fig. 1: eine Schrägansicht eines Kunststoff-Abgasmuffenrohres mit einem Steckring und einem Rohrkörper;
- Fig. 2: eine Seitenansicht des Kunststoff-Abgasmuffenrohres aus Fig. 1;
- Fig. 3: eine Schnittansicht des Kunststoff-Abgasmuffenrohres aus Fig. 2;
- Fig. 4: eine Teilschnittansicht des Kunststoff-Abgasmuffenrohres aus Fig. 3 mit einer Lippendichtung;
- Fig. 5: eine Schrägansicht des Steckrings aus Fig. 1;
- Fig. 6: eine Detailansicht des Steckrings aus Fig. 5;
- Fig. 7: eine Draufsicht des Steckrings aus Fig. 5;
- Fig. 8: eine Schnittansicht des Steckrings aus Fig. 7 entlang einer Linie B-B;
- Fig. 9: eine Teilschnittansicht des Steckrings aus Fig. 8;
- Fig. 10: eine Schnittansicht des Steckrings aus Fig. 7 entlang einer Linie A-A;
- Fig. 11: eine Teilschnittansicht des Steckrings aus Fig. 10;
- Fig. 12: eine Seitenansicht des Rohrkörpers aus Fig. 1;
- Fig. 13: eine Schnittansicht des Rohrkörpers aus Fig. 12;
- Fig. 14: eine Teilschnittansicht des Rohrkörpers aus Fig. 13;
- Fig. 15: eine Teilschnittansicht des Rohrkörpers aus Fig. 13;
- Fig. 16: eine Schrägansicht der Lippendichtung aus Fig. 4;
- Fig. 17: eine Seitenansicht der Lippendichtung aus Fig. 16;
- Fig. 18: eine Teilschnittansicht der Lippendichtung aus Fig. 17;
- Fig. 19: eine Schrägansicht eines Steckrings in einer weiteren Ausführungsform;
- Fig. 20: eine Detailansicht des Steckrings aus Fig. 19;
- Fig. 21: eine Draufsicht des Steckrings aus Fig. 19;
- Fig. 22: eine Schnittansicht des Steckrings aus Fig. 21 entlang einer Linie A-A.

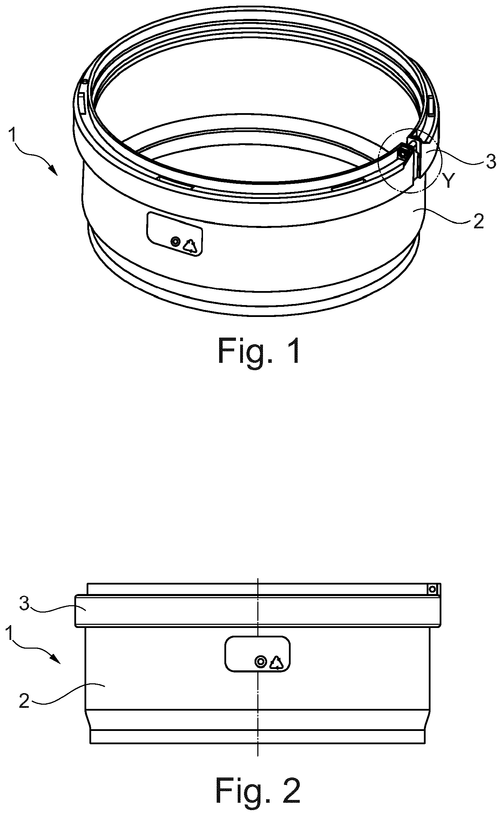

Eine Zusammenschau der Fig. 1 bis 4 zeigt ein nach dem Konzept der Erfindung ausgebildetes Kunststoff-Abgasmuffenrohr 1 bzw. Komponenten davon. Das Abgasmuffenrohr 1 umfasst einen vorliegend im Kunststoffspritzgussverfahren hergestellten Rohrkörper 2 sowie einen als Aufsteckring ausgebildeten Steckring 3, der mit dem Rohrkörper 2 verrastet ist. Der Steckring 3 begrenzt in einem endseitigen Muffenabschnitt 4 des Abgasmuffenrohres 1 eine nach radial innen offene Innenumfangsnut 5, in der eine monolithische, ringförmige, elastomere Lippendichtung 6 aufgenommen ist. In den Muffenabschnitt 4 des Abgasmuffenrohres 1 ist ein nicht gezeigtes weiteres Abgasrohr in einer Einsteckrichtung E einsteckbar.

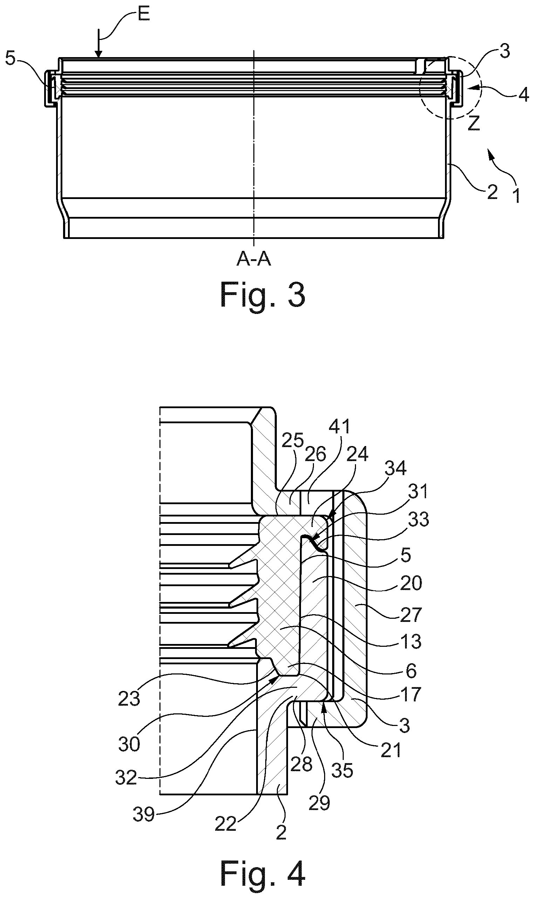

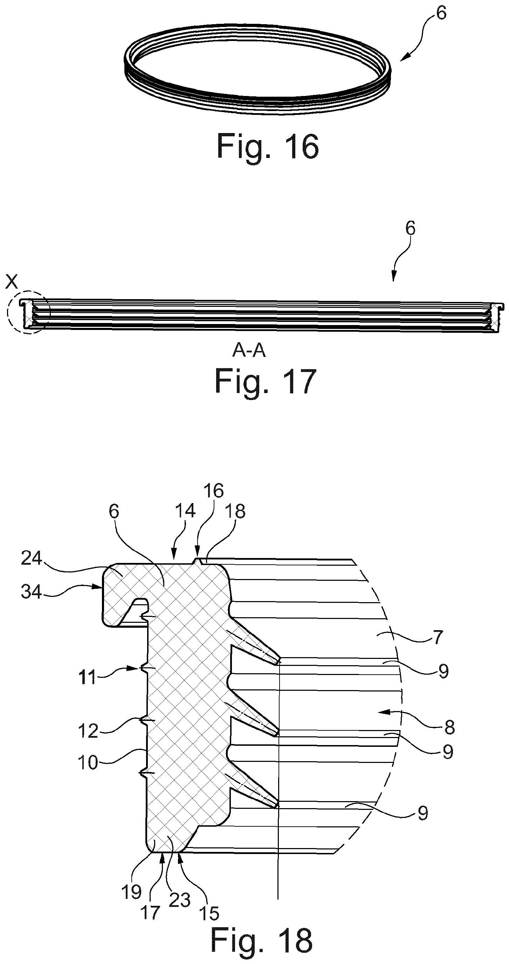

Eine Zusammenschau der Fig. 16 bis 18 zeigt die in der Fig. 4 zu sehende Lippendichtung 6. Die Lippendichtung 6 weist auf einer nach radial innen weisenden Innenseite 7 ein inneres Lippenprofil 8 auf, vorliegend mit drei umfangsgeschlossenen, ringförmigen und in axialer Richtung beabstandeten sowie sich nach radial innen verjüngenden Dichtlippen 9 zur radial äußeren Anlage an dem in der Einsteckrichtung E einzusteckenden Abgasrohr. Davon abgewandt weist die Lippendichtung 6 radial außen eine Außenseite 10 auf, die mit einem radial äußeren Lippenprofil 11 ausgestattet ist. Dieses umfasst im vorliegenden Ausführungsbeispiel eine Mehrzahl von in axialer Richtung beabstandeten, umfangsgeschlossenen und sich in radialer Richtung nach außen verjüngenden, elastischen Dichtlippen 12. Diese dienen zur radial inneren Anlage an einem Nutgrund 13 der Innenumfangsnut 5. Senkrecht zu der Innenseite 7 und der Außenseite 10 erstrecken sich eine erste und eine zweite Axialseite 15, 14 der Lippendichtung 6, die mit einem ersten bzw. zweiten axialen Lippenprofil 17, 16 versehen sind. Das zweite axiale Lippenprofil 16 umfasst in dem gezeigten Ausführungsbeispiel eine in radialer Richtung umfangsgeschlossene und sich entgegen der Einsteckrichtung E verjüngende Dichtlippe 18. Das erste axiale Lippenprofil 17 weist eine erste Nase 23 auf. Weiter weist die Lippendichtung 6 auf der Außenseite 10 eine sich radial nach außen erstreckende hakenförmige zweite Nase 24 mit einem radial außen befindlichen Abschnitt 34 auf.

Aus der Fig. 4 ist auch der Aufbau der Innenumfangsnut 5 ersichtlich. Der Nutgrund 5 wird ausschließlich gebildet von einem ringförmigen, endseitigen und axial vorstehenden Nutgrundabschnitt 20 des Rohrkörpers 2. Eine zweite, in der Einsteckrichtung E gelegene Nutwand 21 wird gebildet von einer inneren Ringschulter 22 des Rohrkörpers 2, die sich ausgehend von einem glatten, axialen Anlageabschnitt 39 für ein einzusteckendes Abgasrohr in radialer Richtung nach außen erstreckt und dann in axialer Richtung entgegen der Einsteckrichtung E übergeht in den Nutgrundabschnitt 20. Der zweiten Nutwand 21 gegenüber liegt eine erste Nutwand 25, die von dem einen Nutwandabschnitt 26 des Steckrings 3 gebildet ist, wobei sich der Nutwandabschnitt 26 in radialer Richtung erstreckt und das Abgasmuffenrohr 1 entgegen der Einsteckrichtung E begrenzt. Im Wesentlichen senkrecht zum Nutwandabschnitt 26 erstreckt sich ein Umfangswandabschnitt 27 des Steckrings 3. Die Lippendichtung 6 stützt sich in radialer Richtung nach außen am Nutgrundabschnitt 20 mit ihrem radial äußeren Lippenprofil 11, genauer mit dessen Dichtlippen 12 ab. Entgegen der Einsteckrichtung stützt sich die Lippendichtung 6 mit ihrem zweiten axialen Lippenprofil 16, genauer mit dessen Dichtlippen 18 am Steckring 3 bzw. der von dessen Nutwandabschnitt 26 gebildeten ersten Nutwand 25 ab. In die entgegengesetzte Richtung, d.h. in der Einsteckrichtung E stützt sich die Lippendichtung 6 mit ihrem ersten axialen Lippenprofil 16, genauer mit dessen als Dichtlippe 19 ausgebildeten erster Nase 23 an der teilweise als eine erste Ausnehmung 30 eines Nutwandabschnitts 32 des Rohrkörpers 2 ausgebildeten zweiten Nutwand 21 ab. Weiter ist die sich radial nach außen erstreckende hakenförmige zweite Nase 24 an einer passend zu der zweiten Nase 24 geformten Axialseite 33 des Nutgrundabschnitts 20 des Rohrkörpers 2 derart angelegt, dass der radial außen befindliche Abschnitt 34 der zweiten Nase 24 den Umfangswandabschnitt 27 berührt. Die Rohrwandung ist aufgedoppelt bzw. wird im Bereich der Innenumfangsnut 5, genauer im Bereich des Nutgrundes 13 gebildet vom Nutgrundabschnitt 20 des Rohrkörpers 2 sowie dem radial außerhalb hiervon befindlichen Umfangswandabschnitt 27 des Steckrings 3. Bemerkenswert ist auch die von dem Nutgrundabschnitt 20 und dem Umfangswandabschnitt 27 gebildete Labyrinthdichtung, in die etwaiges Abgas kaum gelangen kann. Dass es hierzu überhaupt kommt, ist äußerst unwahrscheinlich, aufgrund der zusätzlichen axialen und radialen Lippenprofile. Bevorzugt ist die Höhe der Lippendichtung 6 in einem entspannten Zustand, insbesondere vor dem Einlegen in den Rohrkörper 2 und vor dem Verrasten des Steckrings 3, also in einem entspannten Zustand so ausgebildet, dass bei oder nach dem Verrasten des Steckrings 3 ein Anpressdruck zwischen der Lippendichtung 6 und der ersten Nutwand 25 sowie zwischen der Lippendichtung 6 und der zweiten Nutwand 21 erzeugt wird, sodass eine Dichtwirkung zwischen den Nutwänden 21, 25 und der Lippendichtung 6 erzeugt wird.

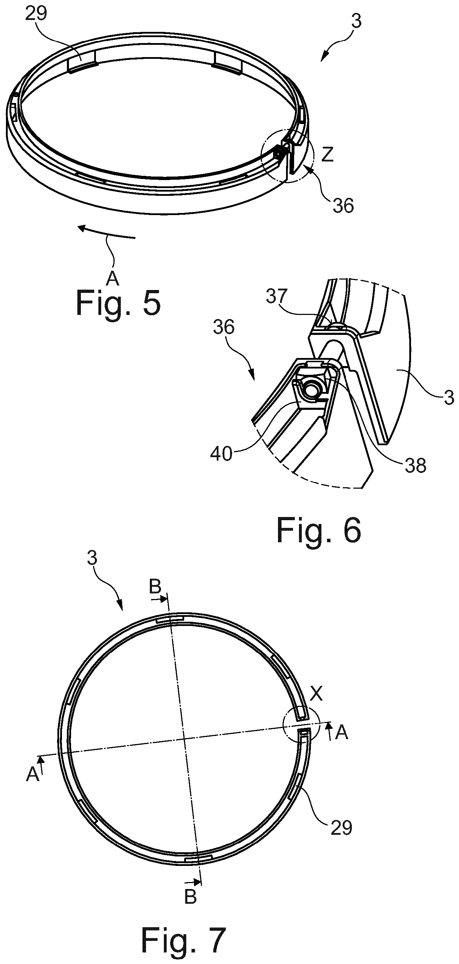

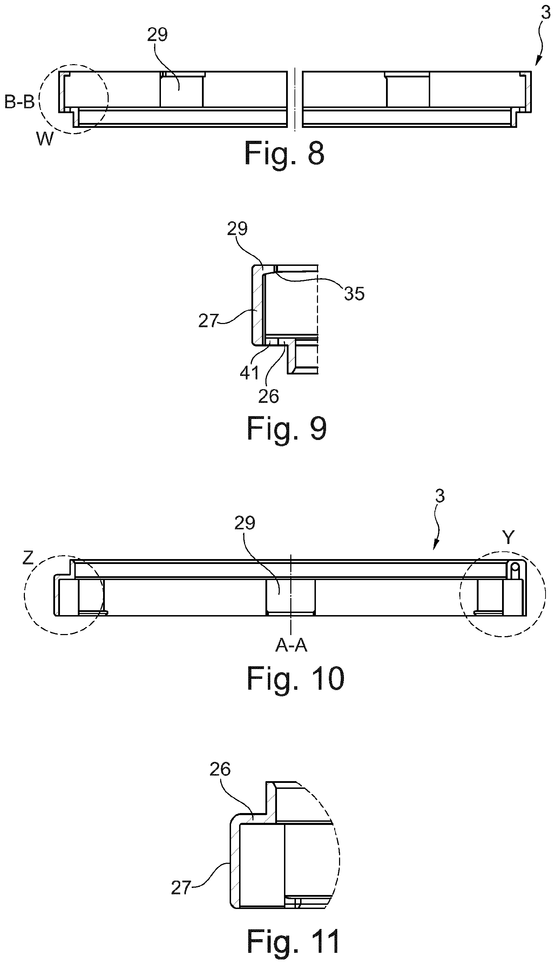

Eine Zusammenschau der Fig. 5 bis 11 zeigt den Steckring 3, welcher in einer azimutalen Richtung A gleichmäßig verteilte Rastmittel 29 aufweist, welche mit von der Ringschulter 22 des Rohrkörpers 2 ausgebildeten Gegenrastmitteln 28 verrastet sind. In der hier gezeigten Ausführungsform sind sechs Rastmittel 29 gleichmäßig, d. h. der Azimutwinkel zwischen zwei benachbarten Rastmitteln 29 beträgt gerade 60°, in der azimutalen Richtung A über den Steckring 3 verteilt. Der Steckring 3 ist als ein mit einem Sicherungsmittel 36 versehener offener Ring ausgebildet. Die Fig. 6 zeigt eine Ausführungsform, bei der als Sicherungsmittel 36 eine Linsenschraube 37 mit einer Vierkantmutter 38 vorgesehen ist, wobei die Vierkantmutter von einem Aufnahmeelement 40 derart aufgenommen ist, dass diese sich bei einem Anziehen der Linsenschraube 37 nicht drehen kann. Durch das Anziehen der Linsenschraube 37 kann der Ring von einem umfangoffenen Zustand in einen umfanggeschlossenen Zustand überführt werden und somit in axialer und radialer Richtung gesichert werden. Wird die Linsenschraube 37 bei Verrastung des Steckrings 3 mit dem Rohrkörper 2 angezogen bzw. wird der umfanggeschlossene Zustand hergestellt, so wird der Steckring 3 parallel zur Einsteckrichtung E bewegt. Dadurch wird die Lippendichtung 6 gequetscht, was zu einer Verbesserung einer Dichtwirkung führt. Die Rastmittel 29 weisen eine Schräge 35 zur Ausbildung einer Quetschkraft auf die Lippendichtung 6 beim Herstellen des umfanggeschlossenen Zustandes auf. Dadurch wird die Quetschwirkung bzw. Dichtwirkung verbessert. Auch wird das in den Muffenabschnitt 4 eingesteckte weitere Abgasrohr durch Herstellung des umfanggeschlossenen Zustands bei einer Herstellung einer Abgasmuffenrohrverbindung gegen Bewegungen in axialer Richtung gesichert. Das Abgasmuffenrohr 1 sowie das weitere Abgasrohr werden so in axialer Richtung von dem Steckring 3 nicht nur fixiert bzw. verbunden, sondern auch axial gesichert. Somit erfolgt durch das Herstellen des umfanggeschlossenen Zustandes nicht nur eine Sicherung des Steckrings 3 an dem Abgasmuffenrohr 1 bzw. an dem weiteren Abgasrohr, sondern auch eine axiale Sicherung des mittels des Steckrings fixierten bzw. verbundenen Abgasmuffenrohrs 1 bzw. des weiteren Abgasrohrs. Weiter kann man einem Vergleich der Fig. 9 mit der Fig. 11 entnehmen, dass der Nutwandabschnitt 26 des Steckrings 3 im Bereich der Rastmittel 29 spritztechnisch bedingt Öffnungen 41 aufweist. Derartige Öffnungen 41 stellen jedoch kein Problem für die Dichtigkeit dar, weil die Öffnungen 41 gemäß der Fig. 4 von der zweiten Nase 24 der Lippendichtung 6 abgedichtet werden.

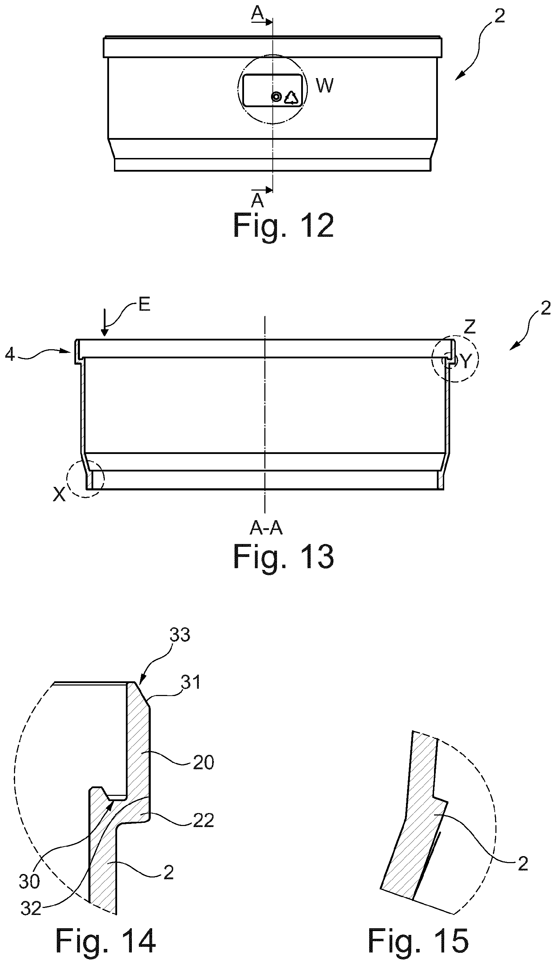

Eine Zusammenschau der Fig. 12 bis 15 zeigt den Rohrkörper 2. Die Fig. 14 zeigt noch einmal im Detail die erste Ausnehmung 30 im Bereich des Nutzwandabschnitts 32 des Rohrkörpers 2 und die zweite Ausnehmung 31 an der Axialseite 33 des Nutgrundabschnitts 20 des Rohrkörpers 2. Weiter kann man den Fig. 12 bis 15 entnehmen, dass der Durchmesser des Rohrkörpers 2 nachfolgend dem Muffenabschnitt 4 in Einsteckrichtung E zunächst konstant bleibt, sich anschließend etwas verkleinert und dann wieder konstant bleibt. Dadurch wird eine Einstecktiefe eines Rohrabschnittes eines weiteren Abgasrohres zur Herstellung einer Abgasmuffenrohrverbindung in Einsteckrichtung E begrenzt.

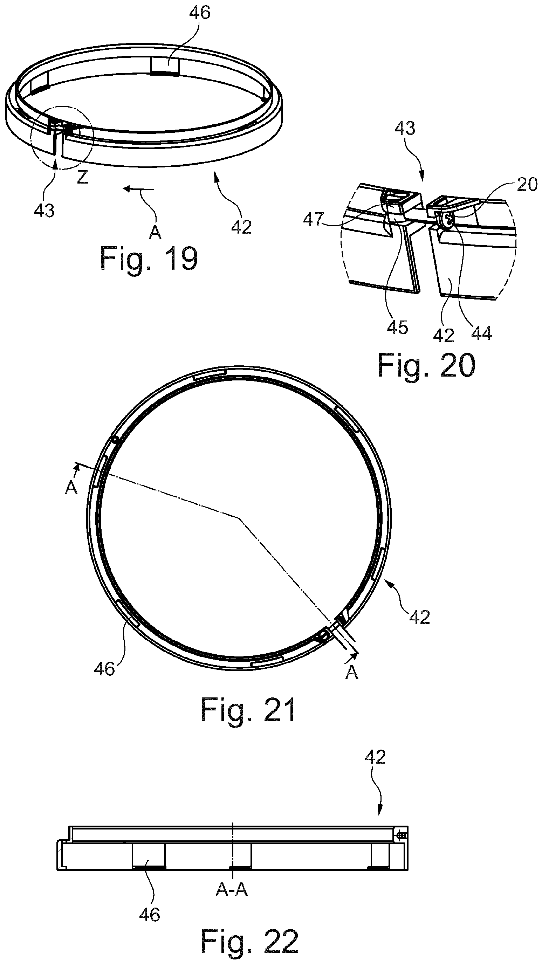

Eine Zusammenschau der Fig. 19 bis 22 zeigt einen Steckring 42 in einer weiteren Ausführungsform. Der Steckring 42 ist in der azimutalen Richtung A gleichmäßig mit Rastmitteln 46 versehen und weist ein Sicherungsmittel 43 auf. Im Unterschied zu dem Sicherungsmittel 36 des Steckrings 3 umfasst das Sicherungsmittel 43 eine Linsenschraube 44 und einen Quergewindebolzen 45, welcher in einem Aufnahmeelement 47 des Steckrings 42 aufgenommen ist. Im Hinblick auf die Gemeinsamkeiten des Steckrings 42 mit dem Steckring 3 wird auf die vorstehende Figurenbeschreibung mit den zugehörigen Figuren verwiesen.

### Bezugszeichen

- 1: Abgasmuffenrohr
- 2: Rohrkörper
- 3: Steckring
- 4: Muffenabschnitt
- 5: Innenumfangsnut
- 6: Lippendichtung
- 7: Innenseite
- 8: inneres Lippenprofil
- 9: Dichtlippen des inneren Lippenprofils
- 10: Außenseite
- 11: äußeres Lippenprofil
- 12: Dichtlippen des radial äußeren Lippenprofils
- 13: Nutgrund der Innenumfangsnut
- 14: zweite Axialseite der Lippendichtung
- 15: erste Axialseite der Lippendichtung
- 16: zweites axiales Lippenprofil
- 17: erstes axiales Lippenprofil
- 18: Dichtlippen des zweiten axialen Lippenprofils
- 19: Dichtlippen des ersten axialen Lippenprofils
- 20: Nutgrundabschnitt des Rohrkörpers
- 21: zweite Nutwand
- 22: Ringschulter
- 23: erste Nase
- 24: zweite Nase
- 25: erste Nutwand
- 26: Nutwandschnitt des Steckrings
- 27: Umfangswandabschnitt
- 28: Gegenrastmittel
- 29: Rastmittel
- 30: erste Ausnehmung
- 31: zweite Ausnehmung
- 32: Nutwandabschnitt des Rohrkörpers
- 33: Axialseite des Nutgrundabschnitts
- 34: Radial außen befindlicher Abschnitt der zweiten Nase
- 35: Schräge
- 36: Sicherungsmittel
- 37: Linsenschraube
- 38: Vierkantmutter
- 39: Anlageabschnitt
- 40: Aufnahmeelement
- 41: Öffnung
- 42: Steckring
- 43: Sicherungsmittel
- 44: Linsenschraube
- 45: Quergewindebolzen
- 46: Rastmittel
- 47: Aufnahmeelement

- E: Einsteckrichtung
- A: azimutale Richtung

## Patentansprüche

1. Kunststoff-Abgasmuffenrohr für die Abgasführung von Gebäudeheizungen, mit einem, bevorzugt als Kunststoffspritzgussteil ausgebildeten, Rohrkörper (2) und einem endseitigen Muffenabschnitt (4) zur Aufnahme eines Rohrabschnittes eines weiteren Abgasrohres zur Herstellung einer Abgasmuffenrohrverbindung, wobei in dem Muffenabschnitt (4) eine als Lippendichtung (6) ausgebildete Ringdichtung zur dichtenden Anlage am Außenumfang des in einer Einsteckrichtung (E) in den Muffenabschnitt (4) einsteckbaren Rohrabschnittes in einer nach radial innen offenen Innenumfangsnut (5) aufgenommen ist, die einen von einem Nutgrundabschnitt des Rohrkörpers (2) gebildeten Nutgrund sowie eine erste und eine zweite sich winklig dazu erstreckende Nutwand (21, 25) aufweist, wobei die Innenumfangsnut (5) entgegen der Einsteckrichtung (E) von einem koaxial zum Rohrkörper (2) angeordneten Steckring (3, 42) des Kunststoff-Abgasmuffenrohrs begrenzt ist, wobei der Steckring (3, 42) mit dem Rohrkörper (2) verrastet ist, wobei die erste Nutwand (25) von einem ringförmigen Nutwandabschnitt (26) des Steckrings (3, 42) gebildet ist, wobei der Steckring (3, 42) einen sich axial zum Nutwandabschnitt (26) erstreckenden, ringförmigen Umfangswandabschnitt (27) umfasst, der bei mit dem Rohrkörper (2) verrastetem Steckring (3, 42) radial außerhalb des den Nutgrund bildenden Nutgrundabschnitt (20) des Rohrkörpers angeordnet ist, der sich radial außen an dem Umfangswandabschnitt (27) des Steckrings (3, 42) abstützt, wobei die Lippendichtung (6) zumindest eine Nase (23, 24) zur Anlage der Lippendichtung (6) an einem Profil einer entsprechend einer Nase (23, 24) geformten im Muffenabschnitt (4) am Rohrkörper (2) befindlichen Ausnehmung (30, 31) ausbildet, wobei der Steckring (3, 42) als ein mit einem Sicherungsmittel (36, 43) versehener offener Ring ausgebildet ist, mittels dessen der Ring von einem umfangoffenen Zustand in einen umfanggeschlossenen Zustand überführbar ist, so dass der Ring im umfanggeschlossenen Zustand gegen Bewegungen in axialer und radialer Richtung sicherbar ist.

2. Kunststoff-Abgasmuffenrohr nach Anspruch 1,
**dadurch gekennzeichnet,**
**dass** die Lippendichtung (6) an einer ersten Axialseite (15) ein erstes axiales Lippenprofil (17) mit einer ersten Nase (23) aufweist, welche an der teilweise als eine erste Ausnehmung (30) eines Nutwandabschnittes (32) des Rohrkörpers (2) ausgebildeten zweiten Nutwand (21) angelegt ist.

3. Kunststoff-Abgasmuffenrohr nach Anspruch 1 oder 2,
**dadurch gekennzeichnet,**
**dass** die Lippendichtung (6) auf einer Außenseite (10) eine sich radial nach außen erstreckende hakenförmige zweite Nase (24) aufweist, welche an einer passend zu der zweiten Nase (24) geformten Axialseite (33) des Nutgrundabschnittes (20) des Rohrkörpers (2) derart angelegt ist, dass ein radial außen befindlicher Abschnitt (34) der zweiten Nase (24) den Umfangswandabschnitt (27) berührt.

4. Kunststoff-Abgasmuffenrohr nach einem der Ansprüche 1 bis 3, **dadurch gekennzeichnet,**
**dass** der Steckring (3, 42) vorzugsweise in einer azimutalen Richtung (A) gleichmäßig verteilte Rastmittel (29, 46) aufweist, welche mit von einer Ringschulter (22) des Rohrkörpers (2) ausgebildeten Gegenrastmitteln (28) verrastet sind.

5. Kunststoff-Abgasmuffenrohr nach Anspruch 4,
**dadurch gekennzeichnet,**
**dass** die Rastmittel (29, 46) eine Schräge (35) zur Ausbildung einer Quetschkraft auf die Lippendichtung (6) beim Herstellen des umfanggeschlossenen Zustandes ausbilden.

6. Kunststoff-Abgasmuffenrohr nach einem der vorhergehenden Ansprüche,
**dadurch gekennzeichnet,**
**dass** ein Innendurchmesser des ringförmigen Umfangswandabschnitts (27) kleiner ist als ein Außendurchmesser des Nutgrundabschnitts (20).

7. Kunststoff-Abgasmuffenrohr nach einem der vorhergehenden Ansprüche,
**dadurch gekennzeichnet,**
**dass** die Innenumfangsnut (5) in der Einsteckrichtung (E) begrenzt ist von der inneren, die zweite Nutwand (21) bildenden Ringschulter (22) des Rohrkörpers (2).

8. Kunststoff-Abgasmuffenrohr nach einem der vorhergehenden Ansprüche,
**dadurch gekennzeichnet,**
**dass** die Lippendichtung (6) aus einem heizungsabgaskondensatbeständigen Elastomermaterial ausgebildet ist.

9. Kunststoff-Abgasmuffenrohr nach einem der vorhergehenden Ansprüche,
**dadurch gekennzeichnet,**
**dass** als Sicherungsmittel (36, 43) eine Linsenschraube (37, 44) zusammen mit einer Vierkantmutter (38) oder einem Quergewindebolzen (45) vorgesehen ist.

10. Kunststoff-Abgasmuffenrohr nach einem der vorhergehenden Ansprüche,
**dadurch gekennzeichnet,**
**dass** als Kunststoff Polypropylen vorgesehen ist.

11. Heizungssystem, umfassend eine Gebäudeheizung, insbesondere eine Gasheizung, und ein daran angeschlossenes Abgasrohrsystem zur Abgasführung, wobei das Abgasrohrsystem mindestens ein Kunststoff-Abgasmuffenrohr (1) nach einem der vorhergehenden Ansprüche umfasst sowie ein in den Muffenabschnitt (4) des Kunststoff-Abgasmuffenrohres (1) eingeschobenes Abgasrohr, an dessen äußerer Mantelfläche die Lippendichtung (6) des Kunststoff-Abgasmuffenrohres (1), insbesondere mit einem inneren Lippenprofil (8), dichtend anliegt.

12. Verfahren zur Herstellung eines Kunststoff-Abgasmuffenrohrs für die Abgasführung von Gebäudeheizungen, mit einem, bevorzugt als Kunststoffspritzgussteil ausgebildeten, Rohrkörper (2) und einem endseitigen Muffenabschnitt (4) zur Aufnahme eines Rohrabschnittes eines weiteren Abgasrohres zur Herstellung einer Abgasmuffenrohrverbindung, wobei in dem Muffenabschnitt (4) eine als Lippendichtung (6) ausgebildete Ringdichtung zur dichtenden Anlage am Außenumfang des in einer Einsteckrichtung (E) in den Muffenabschnitt (4) einsteckbaren Rohrabschnittes in einer nach radial innen offenen Innenumfangsnut (5) aufgenommen wird, die einen von einem Nutgrundabschnitt des Rohrkörpers (2) gebildeten Nutgrund sowie eine erste und eine zweite sich winklig dazu erstreckende Nutwand (21, 25) aufweist, wobei die Innenumfangsnut (5) entgegen der Einsteckrichtung (E) von einem koaxial zum Rohrkörper (2) angeordneten Steckring (3, 42) des Kunststoff-Abgasmuffenrohrs begrenzt wird, wobei der Steckring (3, 42) mit dem Rohrkörper (2) verrastet wird, wobei die erste Nutwand (25) von einem ringförmigen Nutwandabschnitt (26) des Steckrings (3, 42) gebildet ist, wobei der Steckring (3, 42) einen sich axial zum Nutwandabschnitt (26) erstreckenden, ringförmigen Umfangswandabschnitt (27) umfasst, der zur Herstellung eines Kunststoff-Abgasmuffenrohrs mit dem Rohrkörper (2) verrastet wird, so dass der Steckring (3, 42) radial außerhalb des den Nutgrund bildenden Nutgrundabschnitt (20) des Rohrkörpers angeordnet wird und sich radial außen an dem Umfangswandabschnitt (27) des Steckrings (3, 42) abstützt, wobei die Lippendichtung (6) zumindest eine Nase (23, 24) zur Anlage der Lippendichtung (6) an einem Profil einer entsprechend einer Nase (23, 24) geformten im Muffenabschnitt (4) am Rohrkörper (2) befindlichen Ausnehmung (30, 31) ausbildet, wobei der Steckring (3, 42) als ein mit einem Sicherungsmittel (36, 43) versehener offener Ring ausgebildet ist, mittels dessen der Ring von einem umfangoffenen Zustand in einen umfanggeschlossenen Zustand überführt wird, so dass der Ring im umfanggeschlossenen Zustand gegen Bewegungen in axialer und radialer Richtung gesichert wird.

13. Verfahren nach Anspruch 12,
**dadurch gekennzeichnet,**
**dass** die Lippendichtung (6) an einer ersten Axialseite (15) ein erstes axiales Lippenprofil (17) mit einer ersten Nase (23) aufweist, welche an der teilweise als eine erste Ausnehmung (30) eines Nutwandabschnittes (32) des Rohrkörpers (2) ausgebildeten zweiten Nutwand (21) angelegt wird.

14. Verfahren nach Anspruch 12 oder 13,
**dadurch gekennzeichnet,**
**dass** die Lippendichtung (6) auf einer Außenseite (10) eine sich radial nach außen erstreckende hakenförmige zweite Nase (24) aufweist, welche an einer passend zu der zweiten Nase (24) geformten Axialseite (33) des Nutgrundabschnittes (20) des Rohrkörpers (2) derart angelegt wird, dass ein radial außen befindlicher Abschnitt (34) der zweiten Nase (24) den Umfangswandabschnitt (27) berührt.

15. Verfahren nach einem der Ansprüche 12 bis 14,
**dadurch gekennzeichnet,**
**dass** der Steckring (3, 42) vorzugsweise in einer azimutalen Richtung (A) gleichmäßig verteilte Rastmittel (29, 46) aufweist, welche mit von einer Ringschulter (22) des Rohrkörpers (2) ausgebildeten Gegenrastmitteln (28) verrastet werden.

16. Verfahren nach einem der Ansprüche 12 bis 15,
**dadurch gekennzeichnet,**
**dass** der Steckring (3, 42) beim Herstellen des umfanggeschlossenen Zustandes in Richtung der Einsteckrichtung (E) bewegt wird, wodurch die Lippendichtung (6) gequetscht wird.

## Claims

1. A plastic exhaust sleeve pipe for the exhaust gas routing of building heating installations, the plastic exhaust sleeve pipe having a pipe body (2), preferably realized as a plastic injection-molded part, and a sleeve section (4) at the end for receiving a pipe section of another exhaust pipe to establish an exhaust sleeve pipe connection, wherein, in the sleeve section (4), a ring seal realized as a lip seal (6) is received in an inner circumferential groove (5) which is open toward the radial inside for sealing contact with the outer circumference of the pipe section which is insertable into the sleeve section (4) in an insertion direction (E), wherein said inner circumferential groove (5) has a groove base formed by a groove base section of the pipe body (2) and a first and a second groove wall (21, 25) extending angularly thereto, wherein the inner circumferential groove (5) is limited against the insertion direction (E) by a fastening ring (3, 42) of the plastic exhaust sleeve pipe disposed coaxially to the pipe body (2), wherein the fastening ring (3, 42) is locked with the pipe body (2), wherein the first groove wall (25) is formed by an annular groove wall section (26) of the fastening ring (3, 42), wherein the fastening ring (3, 42) comprises an annular circumferential wall section (27) extending axially to the groove wall section (26) and being disposed radially outside the groove base section (20) of the pipe body forming the groove base when the fastening ring (3, 42) is locked with the pipe body (2), the groove base section (20) abutting on the radial outside against the circumferential wall section (27) of the fastening ring (3, 42), wherein the lip seal (6) forms at least one ledge (23, 24) for the contact of the lip seal (6) with a profile of a recess (30, 31) which is formed according to a ledge (23, 24) and is in the sleeve section (4) on the pipe body (2), wherein the fastening ring (3, 42) is realized as an open ring provided with a securing means (36, 43) by means of which the ring can be transferred from a circumferentially open state to a circumferentially closed state such that the ring is securable against displacements in an axial and radial direction in the circumferentially closed state.

2. The plastic exhaust sleeve pipe according to claim 1,
**characterized in that**
the lip seal (6) has a first axial lip profile (17) comprising a first ledge (23) on a first axial side (15), said first ledge (23) being brought into contact with the second groove wall (21) which is partially realized as a first recess (30) of a groove wall section (32) of the pipe body (2).

3. The plastic exhaust sleeve pipe according to claim 1 or 2,
**characterized in that**
the lip seal (6) has a hook-shaped second ledge (24) on an outer side (10), the second ledge (24) extending radially toward the outside and being brought into contact with an axial side (33) of the groove base section (20) of the pipe body (2), which is shaped so as to match the second ledge (24), in such a manner that a section (34) of the second ledge (24) which is radially outside contacts the circumferential wall section (27).

4. The plastic exhaust sleeve pipe according to any one of claims 1 to 3, **characterized in that**
the fastening ring (3, 42) has locking means (29, 46) which, preferably, are evenly distributed in an azimuthal direction (A) and which are locked with counter locking means (28) realized by a ring shoulder (22) of the pipe body (2).

5. The plastic exhaust sleeve pipe according to claim 4,
**characterized in that**
the locking means (29, 46) form an inclined surface (35) for generating a squeezing force which acts on the lip seal (6) when the circumferentially closed state is established.

6. The plastic exhaust sleeve pipe according to any one of the preceding claims, **characterized in that**
an inner diameter of the annular circumferential wall section (27) is smaller than an outer diameter of the groove base section (20).

7. The plastic exhaust sleeve pipe according to any one of the preceding claims, **characterized in that**
the inner circumferential groove (5) is limited in the insertion direction (E) by the inner ring shoulder (22) of the pipe body (2) forming the second groove wall (21).

8. The plastic exhaust sleeve pipe according to any one of the preceding claims, **characterized in that**
the lip seal (6) is made of an elastomer material which is resistant to heating installation exhaust gas condensate.

9. The plastic exhaust sleeve pipe according to any one of the preceding claims, **characterized in that**
an oval head screw (37, 44) together with a square nut (38) or a cross dowel (45) is provided as securing means (36, 43).

10. The plastic exhaust sleeve pipe according to any one of the preceding claims, **characterized in that**
polypropylene is provided as plastic.

11. A heating system comprising a building heating installation, in particular a gas heater, and an exhaust pipe system connected thereto for exhaust gas routing, wherein the exhaust pipe system comprises at least one plastic exhaust sleeve pipe (1) according to any one of the preceding claims and an exhaust pipe inserted into the sleeve section (4) of the plastic exhaust sleeve pipe (1), the lip seal (6) of the plastic exhaust sleeve pipe (1) contacting the outer enveloping surface of said exhaust pipe in a sealing manner, in particular with an inner lip profile (8).

12. A method for producing a plastic exhaust sleeve pipe for the exhaust gas routing of building heating installations, the plastic exhaust sleeve pipe having a pipe body (2), preferably realized as a plastic injection-molded part, and a sleeve section (4) at the end for receiving a pipe section of another exhaust pipe to establish an exhaust sleeve pipe connection, wherein, in the sleeve section (4), a ring seal realized as a lip seal (6) is received in an inner circumferential groove (5) which is open toward the radial inside for sealing contact with the outer circumference of the pipe section which is insertable into the sleeve section (4) in an insertion direction (E), wherein said inner circumferential groove (5) has a groove base formed by a groove base section of the pipe body (2) and a first and a second groove wall (21, 25) extending angularly thereto, wherein the inner circumferential groove (5) is limited against the insertion direction (E) by a fastening ring (3, 42) of the plastic exhaust sleeve pipe disposed coaxially to the pipe body (2), wherein the fastening ring (3, 42) is locked with the pipe body (2), wherein the first groove wall (25) is formed by an annular groove wall section (26) of the fastening ring (3, 42), wherein the fastening ring (3, 42) comprises an annular circumferential wall section (27) which extends axially to the groove wall section (26) and which is locked with the pipe body (2) to produce a plastic exhaust sleeve pipe, such that the fastening ring (3, 42) is disposed radially outside the groove base section (20) of the pipe body forming the groove base and abuts on the radial outside against the circumferential wall section (27) of the fastening ring (3, 42), wherein the lip seal (6) forms at least one ledge (23, 24) for the contact of the lip seal (6) with a profile of a recess (30, 31) which is formed according to a ledge (23, 24) and is in the sleeve section (4) on the pipe body (2), wherein the fastening ring (3, 42) is realized as an open ring provided with a securing means (36, 43) by means of which the ring is transferred from a circumferentially open state to a circumferentially closed state such that the ring is secured against displacements in an axial and radial direction in the circumferentially closed state.

13. The method according to claim 12,
**characterized in that**
the lip seal (6) has a first axial lip profile (17) comprising a first ledge (23) on a first axial side (15), said first ledge (23) being brought into contact with the second groove wall (21) which is partially realized as a first recess (30) of a groove wall section (32) of the pipe body (2).

14. The method according to claim 12 or 13,
**characterized in that**
the lip seal (6) has a hook-shaped second ledge (24) on an outer side (10),
the second ledge (24) extending radially toward the outside and being brought into contact with an axial side (33) of the groove base section (20) of the pipe body (2), which is shaped so as to match the second ledge (24), in such a manner that a section (34) of the second ledge (24) which is radially outside contacts the circumferential wall section (27).

15. The method according to any one of claims 12 to 14,
**characterized in that**
the fastening ring (3, 42) has locking means (29, 46) which, preferably, are evenly distributed in an azimuthal direction (A) and which are locked with counter locking means (28) realized by a ring shoulder (22) of the pipe body (2).

16. The method according to any one of claims 12 to 15,
**characterized in that**
the fastening ring (3, 42) is displaced in the insertion direction (E) when the circumferentially closed state is established, which causes the lip seal (6) to be squeezed.

## Revendications

1. Tuyau de manchon d'échappement en plastique pour l'acheminement des gaz d'échappement de chauffages d'un bâtiment, le tuyau de manchon d'échappement en plastique ayant un corps de tuyau (2) réalisé, de préférence, comme pièce moulée par injection en plastique et une partie de manchon (4) à l'extrémité pour recevoir une partie de tuyau d'un autre tuyau d'échappement afin d'établir une liaison de tuyau de manchon d'échappement, dans lequel, dans la partie de manchon (4), un joint annulaire réalisé comme joint à lèvres (6) est reçu dans une rainure (5) circonférentielle intérieure qui est ouverte vers l'intérieur radial pour le contact étanche avec la circonférence extérieure de la partie de tuyau qui peut être insérée dans la partie de manchon (4) dans une direction d'insertion (E), dans lequel ladite rainure (5) circonférentielle intérieure a un fond de rainure formé par une partie de fond de rainure du corps de tuyau (2) et une première et une deuxième paroi de rainure (21, 25) qui s'étendent angulairement par rapport à celui-ci, dans lequel la rainure (5) circonférentielle intérieure est délimitée dans le sens inverse de la direction d'insertion (E) par un anneau à attacher (3, 42) du tuyau de manchon d'échappement en plastique qui est disposé coaxialement par rapport au corps de tuyau (2), dans lequel l'anneau à attacher (3, 42) est verrouillé avec le corps de tuyau (2), dans lequel la première paroi de rainure (25) est formée par une partie (26) de paroi de rainure annulaire de l'anneau à attacher (3, 42), dans lequel l'anneau à attacher (3, 42) comprend une partie (27) de paroi de circonférence annulaire qui s'étend axialement par rapport à la partie (26) de paroi de rainure et qui est disposée radialement à l'extérieur de la partie (20) de fond de rainure du corps de tuyau qui forme le fond de rainure quand l'anneau à attacher (3, 42) est verrouillé avec le corps de tuyau (2), dans lequel la partie (20) de fond de rainure prend appui à l'extérieur radial contre la partie (27) de paroi de circonférence de l'anneau à attacher (3, 42), dans lequel le joint à lèvres (6) forme au moins une saillie (23, 24) pour le contact du joint à lèvres (6) avec un profil d'un évidement (30, 31) qui est formé conformément à une saillie (23, 24) et qui est situé dans la partie de manchon (4) au corps de tuyau (2), dans lequel l'anneau à attacher (3, 42) est réalisé comme anneau ouvert qui est pourvu d'un moyen de fixation (36, 43) au moyen duquel l'anneau peut être transféré d'un état circonférentiellement ouvert à un état circonférentiellement fermé de manière que l'anneau est fixable contre des déplacements dans une direction axiale et une direction radiale dans l'état circonférentiellement fermé.

2. Tuyau de manchon d'échappement en plastique selon la revendication 1, **caractérisé en ce que**
le joint à lèvres (6) a un premier profil de lèvre (17) axial comprenant une première saillie (23) d'un premier côté axial (15), dans lequel ladite première saillie (23) vient en contact avec la deuxième paroi de rainure (21) qui est au moins partiellement réalisée comme premier évidement (30) d'une partie (32) de paroi de rainure du corps de tuyau (2).

3. Tuyau de manchon d'échappement en plastique selon la revendication 1 ou la revendication 2,
**caractérisé en ce que**
le joint à lèvres (6) a une deuxième saillie (24) en forme de crochet sur un côté extérieur (10), dans lequel la deuxième saillie (24) s'étend radialement vers l'extérieur et vient en contact avec un côté axial (33) de la partie (20) de fond de rainure du corps de tuyau (2), qui est formé de manière à correspondre à la deuxième saillie (24), de telle manière qu'une partie (34) de la deuxième saillie (24) qui est située radialement à l'extérieur vient en contact avec la partie (27) de paroi de circonférence.

4. Tuyau de manchon d'échappement en plastique selon l'une quelconque des revendications 1 à 3,
**caractérisé en ce que**
l'anneau à attacher (3, 42) a des moyens de verrouillage (29, 46) qui, de préférence, sont repartis régulièrement dans une direction azimutale (A) et qui sont verrouillés avec des moyens de contre-verrouillage (28) qui sont réalisés par un épaulement annulaire (22) du corps de tuyau (2).

5. Tuyau de manchon d'échappement en plastique selon la revendication 4, **caractérisé en ce que**
les moyens de verrouillage (29, 46) forment une surface inclinée (35) pour générer une force de serrage qui agit sur le joint à lèvres (6) quand l'état circonférentiellement fermé est établi.

6. Tuyau de manchon d'échappement en plastique selon l'une quelconque des revendications précédentes,
**caractérisé en ce**
**qu'**un diamètre intérieur de la partie (27) de paroi de circonférence annulaire est plus petit qu'un diamètre extérieur de la partie (20) de fond de rainure.

7. Tuyau de manchon d'échappement en plastique selon l'une quelconque des revendications précédentes,
**caractérisé en ce que**
la rainure (5) circonférentielle intérieure est délimitée dans la direction d'insertion (E) par l'épaulement annulaire (22) intérieur du corps de tuyau (2) qui forme la deuxième paroi de rainure (21).

8. Tuyau de manchon d'échappement en plastique selon l'une quelconque des revendications précédentes,
**caractérisé en ce que**
le joint à lèvres (6) est formé d'un matériau élastomère résistant au condensat de gaz d'échappement de chauffages.

9. Tuyau de manchon d'échappement en plastique selon l'une quelconque des revendications précédentes,
**caractérisé en ce**
**qu'**une vis (37, 44) à tête cylindrique bombée conjointement avec un écrou carré (38) ou avec un boulon (45) transversal est prévue comme moyen de fixation (36, 43).

10. Tuyau de manchon d'échappement selon l'une quelconque des revendications précédentes,
**caractérisé en ce que**
le polypropylène est prévu comme plastique.

11. Système de chauffage comprenant un chauffage d'un bâtiment, notamment un chauffage au gaz, et un système de tuyau d'échappement relié à celui-ci pour l'acheminement des gaz d'échappement, dans lequel le système de tuyau d'échappement comprend au moins un tuyau (1) de manchon d'échappement en plastique selon l'une quelconque des revendications précédentes et un tuyau d'échappement qui est inséré dans la partie de manchon (4) du tuyau (1) de manchon d'échappement en plastique, le joint à lèvres (6) du tuyau (1) de manchon d'échappement en plastique venant en contact, notamment avec un profil de lèvre (8) intérieur, avec la surface d'enveloppe extérieure dudit tuyau (1) d'échappement de manière étanche.

12. Procédé de fabrication d'un tuyau de manchon d'échappement en plastique pour l'acheminement des gaz d'échappement de chauffages d'un bâtiment, le tuyau de manchon d'échappement en plastique comprenant un corps de tuyau (2) réalisé, de préférence, comme pièce moulée par injection en plastique et une partie de manchon (4) à l'extrémité pour recevoir une partie de tuyau d'un autre tuyau d'échappement afin d'établir une liaison de tuyau de manchon d'échappement, dans lequel, dans la partie de manchon (4), un joint annulaire réalisé comme joint à lèvres (6) est reçu dans une rainure (5) circonférentielle intérieure qui est ouverte vers l'intérieur radial pour le contact étanche avec la circonférence extérieure de la partie de tuyau qui peut être insérée dans la partie de manchon (4) dans une direction d'insertion (E) , dans lequel ladite rainure (5) circonférentielle intérieure a un fond de rainure formé par une partie de fond de rainure du corps de tuyau (2) et une première et une deuxième paroi de rainure (21, 25) qui s'étendent angulairement par rapport à celui-ci, dans lequel la rainure (5) circonférentielle intérieure est délimitée dans le sens inverse de la direction d'insertion (E) par un anneau à attacher (3, 42) du tuyau de manchon d'échappement en plastique qui est disposé coaxialement par rapport au corps de tuyau (2), dans lequel l'anneau à attacher (3, 42) est verrouillé avec le corps de tuyau (2), dans lequel la première paroi de rainure (25) est formée par une partie (26) de paroi de rainure annulaire de l'anneau à attacher (3, 42), dans lequel l'anneau à attacher (3, 42) comprend une partie (27) de paroi de circonférence annulaire qui s'étend axialement par rapport à la partie (26) de paroi de rainure et qui est verrouillée avec le corps de tuyau (2) pour la fabrication d'un tuyau de manchon d'échappement en plastique, de manière que l'anneau à attacher (3, 42) est disposé radialement à l'extérieur de la partie (20) de fond de rainure du corps de tuyau qui forme le fond de rainure et prend appui à l'extérieur radial contre la partie (27) de paroi de circonférence de l'anneau à attacher (3, 42), dans lequel le joint à lèvres (6) forme au moins une saillie (23, 34) pour le contact du joint à lèvres (6) avec un profil d'un évidement (30, 31) qui est formé conformément à une saillie (23, 34) et qui est situé dans la partie de manchon (4) au corps de tuyau (2), dans lequel l'anneau à attacher (3, 42) est réalisé comme anneau ouvert qui est pourvu d'un moyen de fixation (36, 43) au moyen duquel l'anneau est transféré d'un état circonférentiellement ouvert à un état circonférentiellement fermé, de manière que l'anneau est fixé contre des déplacements dans une direction axiale et une direction radiale dans l'état circonférentiellement fermé.

13. Procédé selon la revendication 12,
**caractérisé en ce que**
le joint à lèvres (6) a un premier profil de lèvre (17) axial comprenant une première saillie (23) d'un premier côté axial (15), dans lequel ladite première saillie (23) vient en contact avec la deuxième paroi de rainure (21) qui est au moins partiellement réalisée comme premier évidement (30) d'une partie (32) de paroi de rainure du corps de tuyau (2).

14. Procédé selon la revendication 12 ou la revendication 13,
**caractérisé en ce que**
le joint à lèvres (6) a une deuxième saillie (24) en forme de crochet sur un côté extérieur (10), dans lequel la deuxième saillie (24) s'étend radialement vers l'extérieur et vient en contact avec un côté axial (33) de la partie (20) de fond de rainure du corps de tuyau (2), qui est formé de manière à correspondre à la deuxième saillie (24), de telle manière qu'une partie (34) de la deuxième saillie (24) qui est située radialement à l'extérieur vient en contact avec la partie (27) de paroi de circonférence.

15. Procédé selon l'une quelconque des revendications 12 à 14,
**caractérisé en ce que**
l'anneau à attacher (3, 42) a des moyens de verrouillage (29, 46) qui, de préférence, sont repartis régulièrement dans une direction azimutale (A) et qui sont verrouillés avec des moyens de contre-verrouillage (28) qui sont réalisés par un épaulement annulaire (22) du corps de tuyau (2).

16. Procédé selon l'une quelconque des revendications 12 à 15,
**caractérisé en ce que**
l'anneau à attacher (3, 2) est déplacé dans la direction d'insertion (E) quand l'état circonférentiellement fermé est établi, ce qui provoque le serrage du joint à lèvres (6).
